# EUROPÄISCHE PATENTSCHRIFT

(11) **EP 2 370 791 B1**
(45) Veröffentlichungstag und Bekanntmachung des Hinweises auf die Patenterteilung: **05.08.2020**
(21) Anmeldenummer: 09806082.5
(22) Anmeldetag: 30.12.2009
(51) Int. Cl.: G01F 1/06, G01F 15/06, G01D 4/02

(54) **VOLUMENZÄHLER FÜR FLÜSSIGKEITEN MIT EINEM ELEKTRONISCHEN ZÄHLERBOARD**
VOLUME METER FOR FLUIDS HAVING AN ELECTRONIC METER BOARD
COMPTEUR VOLUMÉTRIQUE DE LIQUIDES ÉQUIPÉ D'UNE CARTE COMPTEUR ÉLECTRONIQUE

(30) Priorität: 31.12.2008 DE 102008063434
(43) Veröffentlichungstag der Anmeldung: 05.10.2011
(73) Patentinhaber: Elster Messtechnik GmbH, 68623 Lampertheim (DE)
(72) Erfinder: AMEIS, Rüdiger, 69221 Dossenheim (DE)
(74) Vertreter: Eickmeyer, Dietmar
(86) Internationale Anmeldenummer: PCT/EP2009/009325
(87) Internationale Veröffentlichungsnummer: WO 2010/076027

(56) Entgegenhaltungen:
- EP-A1- 1 577 650
- EP-A1- 1 890 116
- WO-A1-02/088642
- DE-A1- 10 133 366
- DE-A1-102005 030 983
- DE-A1-102005 051 117
- DE-A1-102005 051 159
- DE-C1- 19 903 789
- US-A1- 2007 018 849

## Beschreibung

Die Erfindung betrifft einen Volumenzähler für Flüssigkeiten mit einem Zählerboard nach dem Oberbegriff des Patentanspruchs 1.

Herkömmliche Volumenzähler für Flüssigkeiten umfassen in aller Regel eine Zähleinrichtung, insbesondere mit einem Rollenzählwerk, sowie einen Messeinsatz mit einem drehbar gelagerten Flügelrad mit Flügelradwelle, wobei die Zähleinrichtung über ein entsprechendes Getriebe mit der Flügelradwelle beziehungsweise dem Flügelrad zusammenwirkt, um die Durchflussmenge zu bestimmen.

Eine automatisierte weitere Verwertung und/oder Verarbeitung der ermittelten angezeigten Messwerte und insbesondere der Durchflussmessung ist auf diese Weise jedoch nicht möglich.

Soll eine automatisierte Weiterverarbeitung und/oder Verwertung der Messdaten ermöglicht und die Zählgenauigkeit dauerhaft erhalten und gesichert werden, sowie aufgrund der mechanischen Beanspruchung und Abnutzung des Getriebes beziehungsweise seiner Komponenten auftretende Ungenauigkeiten vermieden, zumindest jedoch minimiert werden, so ist der jeweilige Volumenzähler oder -messer, insbesondere ein Rollenzähler, mit einem elektronischen Zähl- /Pulsmodul zu erweitern beziehungsweise nachzurüsten. Um das elektronische Zählmodul mit dem mechanischen Zähler abzugleichen ist dessen Zählernummer und dessen aktueller Zählerstand manuell zu erfassen und/oder einzugeben beziehungsweise diese Informationen manuell dem Modul aufzuprägen.

So ist aus der PCT Anmeldung WO 02/088642 A1 ein Lesemodul für einen Verbrauchszähler, der eine Ausnehmung aufweist, bekannt geworden, in der ein PCB Modul eingesetzt werden kann, das zum Auslesen der Verbrauchsdaten geeignet ist.

Zudem ist in der deutschen Patentanmeldung DE 10 2005 051 159 A1 ein Zähler für ein flüssiges oder gasförmiges Medium offenbart, der die Montage und die Einrichtung eines solchen Zählers verbessert, indem an dessen Gehäuse eine standardisierte Ausnehmung eingeformt ist, die ein entsprechend geformtes Kommunikationsmodul aufnimmt. Zwischen dem Zähler und dem Kommunikationsmodul werden Informationswerte ausgetauscht, nämlich der Zählerstand oder ein dem Zählerstand entsprechender Wert oder Messwert.

Zusätzlich sind weitere spezifische Informationen und Kenndaten des jeweiligen Zählers, wie beispielsweise Seriennummer, Typbezeichnung und dergleichen händisch beziehungsweise manuell und unter Einsatz entsprechender Hilfsmittel, in aller Regel vor Ort beim jeweiligen Zähler, zu erfassen.

Dies bedeutet, insbesondere bei einer Vielzahl von im jeweiligen Versorgungsnetz eingesetzten Volumenmessern, nachteilig jedoch einen vergleichsweise hohen Aufwand und birgt zudem ein vergleichsweise hohes Risiko durch Fehleingaben.

Der Erfindung obliegt die Aufgabe eine einfache und effiziente Möglichkeit zum Abgleich und/oder zur Synchronisation eines Volumenmessers mit mechanischem Zählwerk und mit einem elektronischen Zählermodul und/oder Pulsmodul anzugeben.

Vorgenannte Aufgabe wird durch einen Volumenzähler mit den Merkmalen des Anspruchs 1 gelöst. Vorteilhafte Ausgestaltungen und Weiterbildungen sind in weiteren Ansprüchen und der nachfolgenden Beschreibung angegeben.

Der erfindungsgemäße Volumenzähler für Flüssigkeiten mit einem Rechenwerk, einer Volumenmesseinrichtung mit einem von einem Medium durchströmbaren Messraum, mit wenigstens einem Zufluss sowie wenigstens einem Ablauf, sowie mit einem Messeinsatz, welcher einen über eine Welle drehbar gelagerten Messkörper, und eine Impulsgeberanordnung sowie eine Aufnahme für wenigstens ein Zählermodul umfasst, wobei ein elektronisches Zählerboard mit einer Schnittstelle und mit einer Erfassungseinrichtung mit zumindest einer Sendeeinheit und zumindest einer Empfangseinheit vorgesehen ist, mit welcher die Impulsgeberanordnung abtastbar ist und volumenproportionale Zählimpulse erfassbar oder generierbar und abrufbar speicherbar sind und damit die jeweilige Durchflussmenge oder der jeweilige Zählerstand des Volumenzählers bestimmbar ist, und über die Schnittstelle der Zählerstand abrufbar oder übermittelbar ist.

Der Volumenzähler ist dadurch gekennzeichnet, dass über die Schnittstelle das elektronische Zählerboard mit einem Zählermodul zusammenwirkt, indem bei oder nach Einsetzen des Zählermoduls in den Volumenzähler die Schnittstelle angesprochen wird und durch das Zählermodul die jeweiligen Zählerinformationen vom elektronischen Zählerboard abgerufen werden, wobei die Seriennummer oder die Zählernummer oder der Zählertyp, vom elektronischen Zählerboard abrufbar und in ein eingesetztes Zählermodul übertragbar sind.

Vorteilhaft ist es, dass der Informationsabruf den jeweiligen Zählerstand und/oder die Seriennummer beziehungsweise das Identifikationskennzeichen und/oder den Zählertyp umfasst, d.h. insbesondere ob es sich um einen Kalt- oder Warmwasserzähler handelt.

In einer weiteren vorteilhaften Ausgestaltung umfasst das elektronische Zählerboard wenigstens einen nichtflüchtigen Speicher zur Speicherung der erfassten Zählerimpulse und/oder zählerspezifischer Informationen.

In einer weiteren Ausgestaltung umfasst das elektronische Zählerboard eine Verarbeitungseinrichtung, wie insbesondere eine Mikrokontrollereinrichtung (MCU), einen Mikrokontroller, einen ASIC oder einen Mikroprozessor zur Verarbeitung der erfassten Zählimpulse und/oder Volumenbestimmung.

In einer vorteilhaften Ausgestaltung umfasst die Sensoranordnung der Erfassungseinrichtung zumindest eine Sendeeinheit, insbesondere eine Sende-LED (Light Emitting Diode), und zumindest einer Empfangseinheit, insbesondere eine Photodiode, wobei mittels der Erfassungseinrichtung zur Volumenzählung beziehungsweise - messung vorteilhaft eine Impulsgeberanordnung des jeweiligen Volumenzählers, insbesondere eine Hell-Dunkel-Scheibe eines Volumenzählers, abtastbar und/oder erfassbar ist.

Als Hell-Dunkel-Scheibe wird dabei jeder segmentierte Körper, insbesondere jede Scheibe oder Rolle, verstanden die geeignet ist unter dem Einfluss von elektromagnetischer Strahlung, insbesondere bei Bestrahlung mit Licht im optisch sichtbaren Bereich oder Infrarotbereich durch Reflektion/Absorption, in Rotation Zählimpulse zu generieren. Die Pulslänge hängt dabei von der Rotationsgeschwindigkeit und Größe des jeweiligen Segmentes ab.

Die einzelnen Segmente können demnach beispielsweise mit heller und dunkler Farbe, mit unterschiedlichen Rauhigkeiten und/oder unterschiedlich stark reflektierenden oder das Licht brechenden Schichten ausgebildet, insbesondere belegt, bestrichen oder bedampft sein.

Auch Segmente mit unterschiedlichen Leitfähigkeiten und/oder Kapazitäten sind vorteilhaft vorsehbar.

In einer vorteilhaften Ausgestaltung ist vorsehbar, dass die Abtastung der Hell-Dunkel-Scheibe des jeweiligen Volumenzählers mit Licht im Infrarotbereich erfolgt.

Die Schnittstelle sowie der Informationsabruf können dabei drahtlos, beispielsweise als oder mittels Funk-, Bluetooth, WLAN oder Infrarotschnittstelle, oder drahtgebunden, beispielsweise als USB, SCSI, EIDI oder LAN-Schnittstelle oder einer Kombination daraus, ausbildbar sein.

In einer weiteren Ausgestaltung weist das elektronische Zählerboard eine Signalgeberanordnung auf, welcher bei Verwendung und/oder Einbau beziehungsweise Integration eines Zählermoduls in den jeweiligen Zähler im Zusammenwirken mit der wenigstens einen Schnittstelle automatisiert einen Informationsabruf vom Zähler und/oder dem Board und/oder eine Informationsübertragung beziehungsweise - übermittlung auf das jeweilige Zählermodul initiiert und/oder bewirkt.

Insbesondere kann die Signalgeberanordnung dabei wenigstens einen Taster und/oder eine LED oder Laserdiode mit Licht- beziehungsweise Photosensor umfassen.

So ist beispielsweise vorsehbar, dass bei Einsätzen eines elektronischen Zählermoduls, beispielsweise zur Fernübertragung des Zählerstandes, insbesondere an eine übergeordnete Verwaltungs- und/oder Managementeinrichtung und/oder zur Bestimmung der Durchflussmenge anhand der abrufbar gespeicherten Zählimpulse, die Signalgeberanordnung des Zählerboards ausgelöst und/oder betätigt wird, insbesondere automatisiert ausgelöst und/oder betätigt wird, und/oder nach einer vorbestimmbaren Zeitspanne, beispielsweise eine Minute, das eingesetzte Modul einen Befehl an die Elektronik im Zähler beziehungsweise an das oder dem Zählerboard sendet und daraufhin insbesondere Zählerstand und Seriennummer an das Modul übertragen werden.

Als Informationen sind dabei insbesondere der aktuelle Zählerstand und/oder die Zählernummer beziehungsweise Seriennummer und/oder Zählertyp, beispielsweise ob es sich um einen Warmwasser- oder Kaltwasserzähler handelt, abrufbar beziehungsweise übermittelbar.

In einer weiteren vorteilhaften Ausgestaltung ist vorsehbar, dass der Informationsaustausch auch zyklisch, insbesondere zu festgelegten beziehungsweise vorbestimmbaren Zeitpunkten und/oder Daten oder in vorbestimmbaren Zeitintervallen, wie beispielsweise einmal oder mehrmals im Monat und/oder in der Woche durchführbar ist.

Auch ein Informationsaustausch beziehungsweise eine Synchronisation in Abhängigkeit des Ablesedatum, beispielsweise Ablesedatum weniger ein Tag, ist vorteilhaft vorsehbar.

In einer weiteren Ausgestaltung weist das elektronische Zählerboard eine eigene Energieversorgung auf, welche insbesondere wenigstens eine Batterie, einen Akkumulator, eine Solarzelle beziehungsweise eine photovoltaische Zelle umfasst. Alternativ und/oder ergänzend kann das Zählerboard und/oder das jeweilige Zählermodul auch für eine drahtlose (wireless) Energieübertragung, beispielsweise mittels Ferrit Antenne, vorbereitet und/oder eingerichtet sein.

Weiterhin ist die Schnittstelle zur Daten- beziehungsweise Informationsübertragung an das Zählermodul als serielle Schnittstelle ausgebildet, wobei insbesondere wenigstens einer Sende- und Empfangsdiode, insbesondere in IR (infrarot)-Technik, vorsehbar ist.

Vorteilhaft ist weiterhin auch eine Signalgeberanordnung, insbesondere ein Taster und/oder eine LED oder Laserdiode mit Licht- beziehungsweise Photosensor vorsehbar, der beim Aufsetzen beziehungsweise Einsetzen eines insbesondere elektronischen Zählermoduls auf beziehungsweise in den Volumenzähler beaufschlagt und/oder betätigt, insbesondere gedrückt, wird beziehungsweise ist.

Erfindungsgemäß ist vorgesehen, dass bei oder nach Einsetzen eines Zählermoduls in den Volumenzähler die Schnittstelle angesprochen wird und sich das Modul die jeweiligen Zählerinformationen vom elektronischen Zählerboard abruft. Auf diese Weise ist die Möglichkeit geschaffen ohne manuelle Initialisierung oder Programmierung "Plug&Play"-artig ein beliebiges beziehungsweise beliebig funktionalisiert Zählermodul einzusetzen.

Bei optisch realisierter Schnittstelle ist beispielsweise vorsehbar, dass die Initialisierungssequenz beziehungsweise das Initialisierungssignal mittels angebrachter Silberfolie oder reflektierende Folie, welche die Schnittstelle gegen das jeweilige Zählermodul abschirmt oder isoliert, angeschaltet beziehungsweise ausgelöst wird wenn diese vor der Schnittstelle entfernt, insbesondere automatisiert bei Einsetzen des Zählermoduls entfernt und/oder durchstoßen wird.

Ist beispielsweise die Silberfolie unbeschädigt angebracht, so wird der Initialisierungspuls im jeweiligen Zählermodul reflektiert und das Modul ist noch nicht eingesetzt Beziehung Weise Betrieb genommen.

Umfasst das jeweilige Zählermodul eine Kommunikationseinrichtung zur Kommunikation beispielsweise per Funk, Bluetooth oder WLAN, so ist auch eine Initialisierung mittels Kommunikationssignal, insbesondere Funksignal, beispielsweise von einer zentralen Datenverarbeitungseinrichtung aus, vorsehbar.

In einer weiteren Ausgestaltung sendet das Zählermodul zyklisch, nach einem vorbestimmbaren Zeitintervall, beispielsweise nach ca. 1 Minute, einen Befehl zur jeweiligen Verarbeitungseinheit im Zähler, insbesondere einem Mikrokontroller und/oder einer Mikrocontroller Unit, welche daraufhin Zählerinformationen, wie insbesondere Zählerstand und/oder Seriennummer an das jeweilige Modul überträgt. Des Weiteren kann auch der Typ des jeweiligen Zählers, beispielsweise ob es sich um einen Warm- oder Kaltwasserzähler handelt, da er ja seit der Herstellung bekannt ist, übertragen werden.

In vorteilhafter Weiterbildung ist vorsehbar, dass das aufgesetzte Zählermodul eine Erfassungseinheit mit wenigstens einer Sende-LED und einer Photodiode umfasst, um die Hell-Dunkel-Scheibe selbst beziehungsweise eigenständig abtasten und/oder Pulse generieren zu können.

Falls die Energiequelle, insbesondere die Batterielebensdauer (Preis), ausreicht und/oder die Energieversorgung gewährleistet ist, kann auch die Elektronik im Zähler beziehungsweise das elektronische Zählermodul die Pulszählung weiterführen.

Dies ist aber in aller Regel nur dann möglich, wenn die jeweiligen Informationen und/oder Daten zum Modul in längeren Zyklusintervallen und nicht jede Sekunde übertragen werden, sondern beispielsweise nur alle Stunde.

Darüber hinaus ist auch eine zyklische Synchronisation der Zählerstände in Abhängigkeit vom Ablesedatum, beispielsweise Synchronisation = Ablesedatum - 1 Tag, das heißt, die Synchronisation wird jeweils einen Tag vor dem vorgesehenen Ablesedatum durchgeführt.

Die weitere Darlegung der Erfindung sowie vorteilhafter Ausgestaltungen und Weiterbildungen erfolgt anhand nachfolgender Figur sowie des zugehörigen Ausführungsbeispieles.

Es zeigen
Figur 1 beispielhaft erfindungsgemäß ausgebildeter Volumenzähler mit elektronischem Zählerboard mit Schnittstelle und Erfassungseinrichtung
Figur 2 beispielhaft erfindungsgemäß ausgebildeter Volumenzähler mit elektronischem Zählerboard kombinierte Schnittstellen-Erfassungseinrichtung

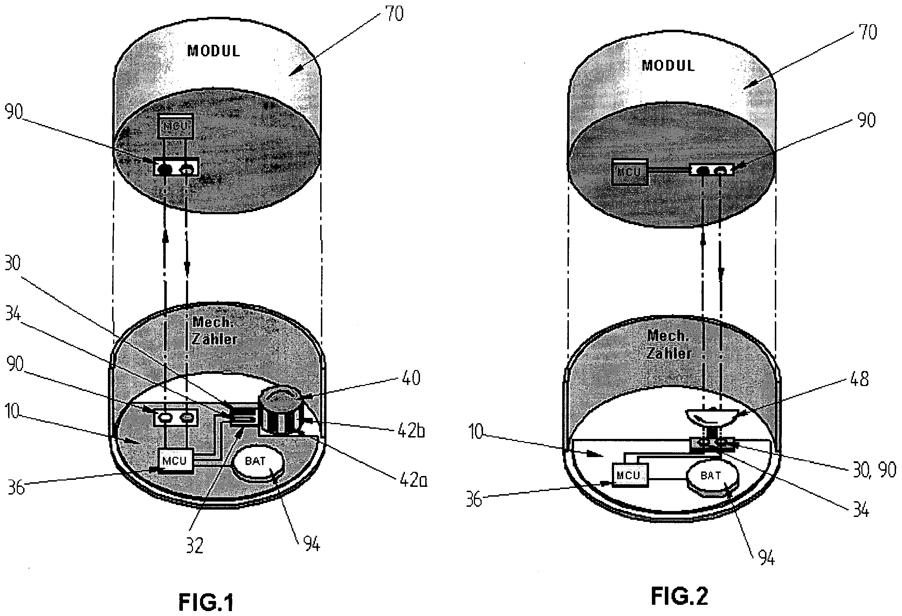

In Fig. 1 ist ein beispielhaft ausgebildete Volumenzähler, hier ein Wasserzähler mit einem Rechenwerk, umfassend ein mechanisches Rollenzählwerk sowie elektronisches Zählerboard 10 mit einer ersten optischen Erfassungseinrichtung 30 mit einer Sende-/Empfangseinheit, welche im Wesentlichen eine Sendeeinheit 32 in Gestalt einer LED oder Laserdiode, eine Photodiode als Empfangseinheit 34 sowie eine vergleichsweise einfach gestaltete Verarbeitungseinrichtung in Form einer Mikrocontroller Unit (MCU) 36, wie insbesondere einen PIC-Mikrocontroller mit integriertem Speicherbaustein, sowie eine Volumenmesseinrichtung mit einem von einem Medium durchströmbaren Messraum mit mehreren Zuflüssen sowie wenigstens einem zentralen Ablauf, sowie mit einer Zähleinrichtung und einem Messeinsatz mit einem über eine Welle drehbar gelagerten Messkörper, insbesondere ein Flügelrad, sowie einer Impulsgeberanordnung mit einer an der Messkörperwelle angeordneten optischen Hell-Dunkel-Scheibe 40, als Rolle beziehungsweise Zylinder ausgebildet, mit vier auf der Oberseite abwechselnd weiß und schwarz gestalteten Segmenten 42a,b. Statt vier können auch zwei oder sechs oder eine andere gerade Anzahl von Segmenten 42a,b vorgesehen sein. Die Hell-Dunkel-Scheibe 40 sowie der Messkörper werden von der jeweiligen strömenden Flüssigkeit in Drehbewegung beziehungsweise Rotation versetzt. Die erste optische Erfassungseinrichtung 30 tastet die Umfangsfläche der Hell-Dunkel-Scheibe 40 optisch ab, indem durch die farblich unterschiedlich gestalteten Segmente 42a,b der durch die Sendeeinheit 32 auf die Segmente 42a,b gerichtete Lichtstrahl bei Rotation unterschiedlich stark in die Empfangseinheit 34 reflektiert und demgemäße volumenproportionale Zählimpulse generiert werden. Diese Zählimpulse werden von der Mikrocontroller Unit 36 erfasst beziehungsweise an diese übermittelt und in eine physikalische Größe, insbesondere in eine Volumenangabe wie beispielsweise Liter I oder Kubikmeter m³ gegebenenfalls auch pro Zeit umgerechnet.

Auf die Anzeige und explizite Angabe der Standardkomponenten des Volumenzählers wird in Fig. 1 aus Gründen der Übersichtlichkeit verzichtet. Die Volumenmesseinrichtung ist nicht explizit gezeigt.

Weiterhin weist der Wasserzähler ein elektronisches Zählermodul 70 mit beispielsweise einer zweiten Erfassungseinrichtung zur Abtastung der Hell-Dunkel-Scheibe 40 der Volumenmesseinrichtung, mit zumindest einer Sendeeinheit in Gestalt einer Sende-LED oder Laserdiode, sowie einer Empfangseinheit in Gestalt einer Photodiode auf. Durch kontinuierliche Abtastung der Hell-Dunkel-Scheibe 40 sind durch das von der beispielsweise LED ausgesandte und dem jeweiligen Segment 42a,b unterschiedlich stark in die Photodiode reflektierte Licht, insbesondere im Infrarotbereich, volumenproportionale elektronische Zählimpulse generierbar. Auch ein Funkmodul zur Übertragung der Zählerinformationen an ein übergeordnetes Leit- oder Managementsystem ist vorteilhaft vorsehbar.

Auch ist eine Infrarotschnittstelle 90 vorgesehen über welche das elektronische Zählermodul 10 mit dem Rechenwerk und insbesondere dem elektronischen Zählerboard und der Mikrocontroller Unit 36 zusammenwirkt und Informationen, wie insbesondere Zählerstand und/oder Seriennummer von dem Rechenwerk beziehungsweise der Mikrocontroller Unit 36 und/oder einem dafür vorgesehenen und eingerichteten nicht flüchtigen Speicher abruft. Die Schnittstellen 90a, b werden dabei durch eine zweite Gruppe LED's, jeweils eine Modul und am Zählerboard, sowie durch jeweils eine Empfangseinheit, beispielsweise in Form einer Photozelle, gebildet. Vorzugsweise sind Empfangseinheit Modul und LED Zählerboard sowie Empfangseinheit Zählerboard und LED Modul beim eingesetzten Modul gegenüberliegend angeordnet.

Die Erfassungseinrichtung des Zählermoduls 70 und oder des Zählermoduls 10 arbeitet im infraroten, alternativ dazu auch im sichtbaren Spektralbereich, wobei die Sendeeinheit Licht entsprechender Wellenlänge aussendet, welches von der Hell-Dunkel-Scheibe 40 segmentabhängig reflektiert wird und wobei die von der rotierenden Hell-Dunkel-Scheibe 40 generierten Pulse von der Photodiode der Empfangseinheit detektiert werden.

Darüber hinaus weist der Volumenzähler eine eigene Energieversorgung 94 auf, welche insbesondere Zählermodul 70, elektronisches Zählerboard, Elektronik und Mikrocontroller 36 mittels Energie versorgt. Als Energiequelle ist dabei eine Batterie, insbesondere Knopfzelle, oder ein Akkumulator oder eine photovoltaische Zelle vorsehbar. Alternativ und/oder ergänzend ist auch eine Energieversorgung mittels wireless-Techniken, beispielsweise unter Einsatz einer Ferrit-Antenne, vorsehbar.

Auch ist ein Taster vorgesehen, der beim Aufsetzen des Zählermoduls 70 auf beziehungsweise in den Volumenzähler beaufschlagt beziehungsweise betätigt wird.

Weiterhin sendet das Zählermodul 70 zyklisch, nach einem vorbestimmbaren Zeitintervall, beispielsweise nach ca. 1 Minute, einen Befehl zur jeweiligen Elektronik im Zähler, insbesondere dem elektronischen Zählerboard 10, einem Mikrokontroller und/oder einer Microcontroller Unit 36, welche daraufhin Zählerinformationen, wie insbesondere Zählerstand und/oder Seriennummer, automatisch an das jeweilige Modul 70 überträgt. Des Weiteren kann auch der Typ des jeweiligen Zählers, beispielsweise ob es sich um einen Warm- oder Kaltwasserzähler handelt, da er ja seit der Herstellung bekannt ist, übertragen werden.

Falls die Energiequelle, insbesondere die Batterielebensdauer (Preis), ausreicht und/oder die Energieversorgung gewährleistet ist, kann auch die Elektronik im Zähler die Pulszählung weiterführen.

Darüber hinaus ist auch eine zyklische Synchronisation der Zählerstände in Abhängigkeit vom Ablesedatum, beispielsweise Synchronisation = Ablesedatum - 1 Tag, ermöglicht, das heißt die Synchronisation wird jeweils einen Tag vor dem vorgesehenen Ablesedatum durchgeführt. Die Synchronisationsrichtung ist dabei frei wählbar, auch Mittelwertbildung aus beiden Zählerständen ist vorteilhaft vorsehbar.

Auch kann das jeweilige elektronische Zählermodul 70 weitere Einrichtungen, wie beispielsweise eine GPS-Einheit zur Positionsbestimmung des jeweiligen Wasserzählers, insbesondere in Verbindung mit der Seriennummer beziehungsweise Gerätenummer, oder ein Funkmodul zur drahtlosen Informationsübermittlung an beispielsweise eine zentrale Datenverarbeitungseinrichtung und/oder ein übergeordnetes Steuer-, Leit- oder Überwachungssystem, aufweisen.

In Fig. 2 ist eine alternative Ausgestaltung eines erfindungsgemäßen Volumenzählers gezeigt, wobei optische Erfassungseinrichtung und Schnittstelle zur Informationsübertragung vom eingesetzten Zählermodul und vom elektronischen Zählerboard jeweils kombiniert ausgebildet sind, derart, dass auf separate Schnittstellen LED's verzichtet werden kann. Gegenüber Fig. 1 umfasst die Impulsgeberanordnung demgemäß eine Teil kreisförmig ausgebildete Hell-Dunkel-Scheibe 40 als Impulsgeber auf ihrer Oberseite und ihrer Unterseite reflektierenden Kreissegmenten, wobei das elektronische Zählerboard 10 den Impulsgeber, besondere die Scheibe und unten her abtastet und ein eingesetztes elektronisches Zählermodul 70 derart angeordnet ist, dass die Abtastung des Impulsgebers und insbesondere der Scheibe 48 durch das Modul von oben her erfolgt. Wird das Modul eingesetzt, so sind weiterhin die beiden Erfassungseinrichtungen/Schnittstellen-Kombination von Modul und Zählerboard gegenüberliegend angeordnet, sodass das Abtastsignal der Erfassungseinrichtung 30 des Zählerboards durch die unterbrochene Scheibe (Impulsgeber) hindurch vom Modul empfangen werden kann und daraufhin automatisiert die Informationsabfrage durch das jeweilige Modul initiiert ist beziehungsweise wird.

Es sei an dieser Stelle darauf hingewiesen, dass sende-und Empfangseinheit, also beispielsweise LED und Photozelle kombiniert als eine Einheit beziehungsweise in eine Einheit integrabel oder integrierbar und/oder ausbildbar sind, insbesondere bei Infrarot Anwendungen üblich. Diese wird nachfolgend auch einfach als LED bezeichnet.

Beispielhaft ist in Fig. 2 demgemäß ein als halbrundes Plättchen 48 ausgebildeter Impulsgeber vorgesehen, der auf beiden Seiten reflektiv ausgebildet ist und durch den Messkörper sowie dessen Welle in Drehbewegung versetzbar ist und/oder als Scheibe rotiert. Das Zählerboard 10 beziehungsweise dessen Empfangseinrichtung umfasst zwei LED's welche von unten den Impulsgeber und damit die Rotation beziehungsweise die Rotationsbewegung erfassen.

Soll auch die Drehbewegung ermittelt werden, so sind für die Abtastung von unten vorteilhaft vier LED's vorzusehen.

Das elektronische Zählermodul 70 wiederum weist zwei LED's auf, welche den LED's des Zählerboards 10 nahezu gegenüberliegen. Wird das Modul eingesetzt beziehungsweise auf den Zähler aufgesetzt, so sendet dies eine Init-Sequenz beziehungsweise ein Init- Signal welches sich vom herkömmlichen Zähl- Signal beziehungsweise Zählimpuls unterscheidet. Dieses Init- Signal oder - Sequenz wird vom Zählerboard empfangen und veranlasst dieses zählerspezifische Informationen, wie beispielsweise Zählertyp, Zählerstand und Zähler- Seriennummer an das Modul zu übertragen.

## Patentansprüche

1. Volumenzähler für Flüssigkeiten mit einem Rechenwerk, einer Volumenmesseinrichtung mit einem von einem Medium durchströmbaren Messraum, mit wenigstens einem Zufluss sowie wenigstens einem Ablauf, sowie mit einem Messeinsatz, welcher einen über eine Welle drehbar gelagerten Messkörper, und eine Impulsgeberanordnung (40, 48) sowie eine Aufnahme wenigstens ein Zählermodul (70) umfasst, wobei ein elektronisches Zählerboard (10) mit einer Schnittstelle und mit einer Erfassungseinrichtung (30) mit zumindest einer Sendeeinheit (32) sowie zumindest einer Empfangseinheit (34) vorgesehen ist, mit welcher die Impulsgeberanordnung (40, 48) abtastbar ist und volumenproportionale Zählimpulse erfassbar oder generierbar und abrufbar speicherbar sind und damit die jeweilige Durchflussmenge oder der jeweilige Zählerstand des Volumenzählers bestimmbar ist, und über die Schnittstelle (90) der Zählerstand abrufbar oder übermittelbar ist,
**dadurch gekennzeichnet, dass**
über die Schnittstelle (90) das elektronische Zählerboard (10) mit einem Zählermodul (70) zusammenwirkt, indem bei oder nach Einsetzen des Zählermoduls in den Volumenzähler die Schnittstelle (90) angesprochen wird und durch das Zählermodul (70) die jeweiligen Zählerinformationen vom elektronischen Zählerboard (10) abgerufen werden, wobei die Seriennummer oder die Zählernummer oder der Zählertyp, vom elektronischen Zählerboard (10) abrufbar und in das eingesetzte Zählermodul (70) übertragbar sind.

2. Volumenzähler nach Anspruch 1, **dadurch gekennzeichnet, dass** die Abtastung der Impulsgeberanordnung des Volumenzählers und die Erfassung der Zählimpulse mit Licht im Infrarotbereich erfolgt.

3. Volumenzähler nach einem der vorherigen Ansprüche, **dadurch gekennzeichnet, dass** die Schnittstelle (90) als serielle Schnittstelle oder als Infrarotschnittstelle ausgebildet ist.

4. Volumenzähler nach einem der vorherigen Ansprüche, **dadurch gekennzeichnet, dass** die Schnittstelle (90) und der Informationsabruf dabei drahtlos, insbesondere als Funk-, Bluetooth, WLAN oder Infrarotschnittstelle, oder drahtgebunden, insbesondere als USB, SCSI, EIDI oder LAN-Schnittstelle, ausführbar ist.

5. Volumenzähler nach einem der vorherigen Ansprüche, **dadurch gekennzeichnet, dass** eine Signalgeberanordnung vorgesehen ist, welche bei Einbau oder Integration des Zählermoduls (70) in den Volumenzähler im Zusammenwirken mit der wenigstens einen Schnittstelle (90) automatisiert einen Informationsabruf vom Zähler initiiert oder bewirkt.

6. Volumenzähler nach Anspruch 5, **dadurch gekennzeichnet, dass** die Signalgeberanordnung einen Signalgeber umfasst, welcher als Taster, der beim Aufsetzen des elektronischen Zählermoduls (70) auf oder in den Volumenzähler beaufschlagt und betätigt, insbesondere gedrückt, wird, oder als Licht- oder Photosensor ausgebildet ist.

7. Volumenzähler nach einem der vorherigen Ansprüche, **dadurch gekennzeichnet, dass** der Informationsaustausch auch zyklisch, insbesondere zu festgelegten oder vorbestimmbaren Zeitpunkten und/ oder Daten oder in vorbestimmbaren Zeitintervallen durchführbar ist.

8. Volumenzähler nach einem der vorherigen Ansprüche, **dadurch gekennzeichnet, dass** an dem Zählerboard (10) eine eigene Energieversorgung vorgesehen ist, welche insbesondere wenigstens eine Batterie (94), einen Akkumulator, eine Solarzelle und/oder eine photovoltaische Zelle umfasst, und/oder dass das Zählerboard (10) für eine drahtlose Energieübertragung, insbesondere mittels Ferrit Antenne, vorbereitet und eingerichtet ist.

9. Volumenzähler nach einem der vorherigen Ansprüche, **dadurch gekennzeichnet, dass** die Impulsgeberanordnung (40, 48) eine Hell-Dunkel-Scheibe ist.

10. Volumenzähler nach Anspruch 9, **dadurch gekennzeichnet, dass** die Erfassungseinrichtung (30) im infraroten oder sichtbaren Spektralbereich agiert, wobei die Sendeeinheit Licht entsprechender Wellenlänge aussendet, welches von der Hell-Dunkel-Scheibe (40) segmentabhängig reflektiert wird und wobei die von der rotierenden Hell-Dunkelscheibe (40) Hell-Dunkel-Pulse von der Empfangseinheit detektiert werden.

11. Volumenzähler nach Anspruch 9 oder 10, **dadurch gekennzeichnet, dass** das elektronische Zählerboard (10) eine Verarbeitungseinheit umfasst, insbesondere eine als Mikrocontroller und/oder Mikrocontroller Unit (36) ausgebildete Verarbeitungseinheit, welche die anhand der durch Abtastung der Hell-Dunkel-Scheibe (40) generierten Zählimpulse erfasst und/oder anhand der erfassten Zählimpulse die jeweilige Durchflussmenge bestimmt.

12. Volumenzähler nach Anspruch 11, **dadurch gekennzeichnet, dass** die Seriennummer des Volumenzählers in der Verarbeitungseinheit, insbesondere in einem Mikrocontroller oder in einer Mikrokontroller Einheit (36), erfasst ist.

13. Volumenzähler nach einem der vorherigen Ansprüche, **dadurch gekennzeichnet, dass** eine eigene Energieversorgung (94) vorgesehen ist, durch welche Zählermodul (70) und/oder Elektronik oder elektronisches Zählerboard (10) und/oder Mikrocontroller (36) mit Energie versorgt ist.

14. Volumenzähler nach einem der vorherigen Ansprüche, **dadurch gekennzeichnet, dass** die Schnittstelle (90) zur Daten- beziehungsweise Informationsübertragung an das Zählermodul (70) mittels wenigstens einer Sende- und Empfangsdiode, insbesondere in Infrarot-Technik ausgebildet ist.

## Claims

1. Volume meter for liquids, having an arithmetic unit, a volume measuring device with a measuring chamber through which a medium can flow, with at least one inflow and at least one outlet, and with a measuring insert which comprises a measuring body rotatably mounted via a shaft and a pulse generator arrangement (40, 48) as well as a receptacle for at least one meter module (70), wherein an electronic meter board (10) having an interface and having a capture device (30) with at least one transmitting unit (32) and at least one receiving unit (34) is provided, with which the pulse generator arrangement (40, 48) can be scanned and metering pulses proportional to the volume can be captured or generated and stored in a retrievable manner and the respective flow rate or the respective meter reading of the volume meter can therefore be determined, and the meter reading can be retrieved or transmitted via the interface (90),
**characterized in that**
the electronic meter board (10) interacts with a meter module (70) via the interface (90) by virtue of the interface (90) being addressed during or after insertion of the meter module into the volume meter and the respective meter information being retrieved from the electronic meter board (10) by means of the meter module (70), wherein the serial number or the meter number or the meter type can be retrieved from the electronic meter board (10) and can be transmitted to the inserted meter module (70).

2. Volume meter according to Claim 1, **characterized in that** the scanning of the pulse generator arrangement of the volume meter and the capture of the metering pulses are carried out using light in the infrared range.

3. Volume meter according to one of the preceding claims, **characterized in that** the interface (90) is in the form of a serial interface or an infrared interface.

4. Volume meter according to one of the preceding claims, **characterized in that** interface (90) and the information retrieval can be executed wirelessly, in particular as a radio, Bluetooth, WLAN or infrared interface, or in a wired manner, in particular as a USB, SCSI, EIDI or LAN interface.

5. Volume meter according to one of the preceding claims, **characterized in that** a signal generator arrangement is provided and, during installation or integration of the meter module (70) into the volume meter, initiates or causes information retrieval from the meter in an automated manner in interaction with the at least one interface (90).

6. Volume meter according to Claim 5, **characterized in that** the signal generator arrangement comprises a signal generator which is in the form of a pushbutton, which is acted on and actuated, in particular pressed, when placing the electronic meter module (70) onto or into the volume meter, or is in the form of a light sensor or photosensor.

7. Volume meter according to one of the preceding claims, **characterized in that** information can also be interchanged cyclically, in particular at defined or predeterminable times and/or for defined or predeterminable data or at predeterminable intervals of time.

8. Volume meter according to one of the preceding claims, **characterized in that** a separate energy supply is provided on the meter board (10) and comprises, in particular, at least one battery (94), a rechargeable battery, a solar cell and/or a photovoltaic cell, and/or **in that** the meter board (10) is prepared and configured for wireless energy transmission, in particular by means of a ferrite antenna.

9. Volume meter according to one of the preceding claims, **characterized in that** the pulse generator arrangement (40, 48) is a light/dark disc.

10. Volume meter according to Claim 9, **characterized in that** the capture device (30) acts in the infrared or visible spectral range, wherein the transmitting unit emits light of a corresponding wavelength which is reflected by the light/dark disc (40) in a segment-dependent manner, and wherein the light/dark pulses from the rotating light/dark disc (40) are detected by the receiving unit.

11. Volume meter according to Claim 9 or 10, **characterized in that** the electronic meter board (10) comprises a processing unit, in particular a processing unit which is in the form of a microcontroller and/or a microcontroller unit (36) and captures the metering pulses generated by scanning the light/dark disc (40) and/or determines the respective flow rate on the basis of the captured metering pulses.

12. Volume meter according to Claim 11, **characterized in that** the serial number of the volume meter is captured in the processing unit, in particular in a microcontroller or in a microcontroller unit (36) .

13. Volume meter according to one of the preceding claims, **characterized in that** a separate energy supply (94) is provided and is used to supply the meter module (70) and/or the electronics or the electronic meter board (10) and/or the microcontroller (36) with energy.

14. Volume meter according to one of the preceding claims, **characterized in that** the interface (90) is designed to transmit data and/or information to the meter module (70) by means of at least one transmitting and receiving diode, in particular using infrared technology.

## Revendications

1. Compteur volumétrique pour liquides comprenant une unité de calcul, un dispositif de mesure de volume ayant un espace de mesure qui peut être traversé par un écoulement de fluide, pourvu d'au moins une arrivée ainsi que d'au moins un écoulement, et pourvu d'un insert de mesure, lequel comporte un corps de mesure monté à rotation par le biais d'un arbre et un arrangement transmetteur d'impulsions (40, 48) ainsi qu'un logement pour au moins un module de compteur (70), une carte de compteur électronique (10) comprenant une interface et comprenant un dispositif d'acquisition (30) pourvu d'au moins une unité d'émission (32) ainsi que d'au moins une unité de réception (34) étant présente, avec laquelle l'arrangement transmetteur d'impulsions (40, 48) peut être échantillonné et des impulsions de comptage proportionnelles au volume peuvent être acquises ou peuvent être générées et mémorisées de manière interrogeable et ainsi le débit volumique respectif ou l'état de comptage respectif du compteur volumétrique peut être déterminé,
et l'état de comptage pouvant être interrogé ou pouvant être communiqué par le biais de l'interface (90),
**caractérisé en ce que**
la carte de compteur électronique (10) coopère avec un module de compteur (70) par le biais de l'interface (90) par le fait que lors de l'insertion ou après l'insertion du module de compteur dans le compteur volumétrique, l'interface (90) est sollicitée et les informations de compteur respectives sont interrogées par la carte de compteur électronique (10) par le biais du module de compteur (70),
le numéro de série ou le numéro de compteur ou le type de compteur peuvent être interrogés par la carte de compteur électronique (10) et peuvent être transmis dans le module de compteur (70) inséré.

2. Compteur volumétrique selon la revendication 1, **caractérisé en ce que** l'échantillonnage de l'arrangement transmetteur d'impulsions du compteur volumétrique et l'acquisition des impulsions de comptage s'effectuent avec de la lumière dans la plage des infrarouges.

3. Compteur volumétrique selon l'une des revendications précédentes, **caractérisé en ce que** l'interface (90) est réalisée sous la forme d'une interface série ou d'une interface à infrarouges.

4. Compteur volumétrique selon l'une des revendications précédentes, **caractérisé en ce que** l'interface (90) et l'interrogation des informations peuvent ici être réalisées sans fil, notamment sous la forme d'une interface hertzienne, Bluetooth, WLAN ou à infrarouges, ou de manière filaire, notamment sous la forme d'une interface USB, SCSI, EIDI ou LAN.

5. Compteur volumétrique selon l'une des revendications précédentes, **caractérisé en ce qu'**un arrangement transmetteur de signal est présent, lequel, lors du montage ou de l'intégration du module de compteur (70) dans le compteur volumétrique, initie ou provoque automatiquement une interrogation des informations par le compteur en coopération avec l'au moins une interface (90).

6. Compteur volumétrique selon la revendication 5, **caractérisé en ce que** l'arrangement transmetteur de signal comporte un transmetteur de signal, lequel est réalisé sous la forme d'une touche qui est sollicitée et actionnée, notamment enfoncée, lors du montage du module de compteur (70) électronique sur ou dans le compteur volumétrique, ou sous la forme d'un capteur de lumière ou photoélectrique.

7. Compteur volumétrique selon l'une des revendications précédentes, **caractérisé en ce que** l'échange d'informations peut également être réalisé de manière cyclique, notamment à des instants et/ou des dates spécifiés ou pouvant être prédéterminés ou à des intervalles de temps pouvant être prédéterminés.

8. Compteur volumétrique selon l'une des revendications précédentes, **caractérisé en ce qu'**une alimentation en énergie propre est présente au niveau de la carte de compteur (10), laquelle comporte notamment au moins une pile (94), un accumulateur, une cellule solaire et/ou une cellule photovoltaïque, et/ou **en ce que** la carte de compteur (10) est préparée et conçue pour une transmission d'énergie sans fil, notamment au moyen d'une antenne en ferrite.

9. Compteur volumétrique selon l'une des revendications précédentes, **caractérisé en ce que** l'arrangement transmetteur d'impulsions (40, 48) est un disque clair-obscur.

10. Compteur volumétrique selon la revendication 9, **caractérisé en ce que** le dispositif d'acquisition (30) agit dans la plage spectrale des infrarouges ou visible, l'unité d'émission émettant de la lumière à une longueur d'onde correspondante, laquelle est réfléchie par le disque clair-obscur (40) en fonction du segment et les impulsions clair-obscur du disque clair-obscur (40) en rotation étant détectées par l'unité de réception.

11. Compteur volumétrique selon la revendication 9 ou 10, **caractérisé en ce que** la carte de compteur électronique (10) comporte une unité de traitement, notamment une unité de traitement réalisée sous la forme d'un microcontrôleur et/ou d'une unité à microcontrôleur (36), qui acquiert les impulsions de comptage générées à l'aide de l'échantillonnage du disque clair-obscur (40) et/ou détermine le débit volumique respectif à l'aide des impulsions de comptage acquises.

12. Compteur volumétrique selon la revendication 11, **caractérisé en ce que** le numéro de série du compteur volumétrique est acquis dans l'unité de traitement, notamment dans un microcontrôleur et/ou une unité à microcontrôleur (36).

13. Compteur volumétrique selon l'une des revendications précédentes, **caractérisé en ce qu'**une alimentation en énergie (94) propre est présente, par le biais de laquelle le module de compteur (70) et/ou l'électronique ou la carte de compteur électronique (10) et/ou le microcontrôleur (36) sont alimentés en énergie.

14. Compteur volumétrique selon l'une des revendications précédentes, **caractérisé en ce que** l'interface (90) est configurée pour la transmission de données ou d'informations au module de compteur (70) au moyen d'au moins une diode d'émission et de réception, notamment en technique infrarouge.
